Europäisches Patentamt

**European Patent Office**

**Office européen des brevets**

(19)

(11) Veröffentlichungsnummer: **0 167 736**

**B1**

(12)

# EUROPÄISCHE PATENTSCHRIFT

(45) Veröffentlichungstag der Patentschrift:
10.08.88

(21) Anmeldenummer: **85105308.2**

(22) Anmeldetag: **02.05.85**

(51) Int. Cl.⁴: **B 01 D 13/00**

(54) **Verfahren zum Überführen von Metallionen unter Verwendung mikroporöser Membranen.**

(30) Priorität: **21.05.84 DE 3418825**
**21.03.85 DE 3510187**

(43) Veröffentlichungstag der Anmeldung:
**15.01.86 Patentblatt 86/3**

(45) Bekanntmachung des Hinweises auf die Patenterteilung:
**10.08.88 Patentblatt 88/32**

(84) Benannte Vertragsstaaten:
**AT BE DE FR GB IT NL SE**

(56) Entgegenhaltungen:
**DE-A-2 364 679**
**DE-A-2 550 006**
**DE-A-2 910 793**

(73) Patentinhaber: **Akzo GmbH, Postfach 10 01 49**
**Kasinostrasse 19- 23, D-5600 Wuppertal- 1 (DE)**

(72) Erfinder: **Ostertag, Karl, Dr. Dipl.- Ing., Dr.**
**Jordanstrasse 2, D-8765 Erlenbach (DE)**

EP 0 167 736 B1

LIBER, STOCKHOLM 1988

## Beschreibung

Die Erfindung betrifft ein Verfahren zum Überführen von Metallionen aus einer wäßrigen Flüssigkeit A in eine nichtwäßrige Flüssigkeit B und von B in eine wäßrige Flüssigkeit Z, wobei B in einer ersten Überführungszone die Metallionen aus A aufnimmt und anschließend zu einer zweiten Überführungszone geführt wird, in der es die Metallionen an Z abgibt. Die Flüssigkeit B ist hierbei mit den Flüssigkeiten A und Z nicht oder nicht nennenswert mischbar, enthält mindestens einen Komplexbildner für die Metallionen und stellt ein Lösungsmittel für die Metallionenkomplexe dar. Die Flüssigkeit B wird kontinuierlich im Kreislauf durch die Überführungszonen geführt, wobei die Flüssigkeit A von der im Kreislauf geführten Flüssigkeit B durch eine oder mehrere mikroporöse hydrophobe Membranen getrennt gehalten wird, in deren Poren sich ein Teil der Gesamtmenge der Flüssigkeit B befindet.

Verfahren, bei denen Metallionen aus einer wäßrigen Lösung zu entfernen sind, finden beispielsweise Anwendung in der Erzaufbereitung. Hierbei ist es vielfach erwünscht, selektiv Ionen einer bestimmten Art aus einer wäßrigen Flüssigkeit zu überführen und daraus das Metall in reiner Form zu gewinnen. Ein anderes Einsatzgebiet für derartige Verfahren ist die Abwasserreinigung, wo Metalle bis auf geringe Spuren aus wäßrigen Flüssigkeiten zu entfernen sind.

Verfahren zur Überführung von Metallionen aus einer wäßrigen Lösung in eine andere unter Zwischenschaltung einer Komplexierung sind bekannt. So beschreibt die DE-OS-29 10 793 ein Verfahren, bei dem eine organische Flüssigkeit, welche einen Komplexbildner enthält, sich in den Poren einer Membran befindet. Jeweils eine Oberfläche der Membran steht in Kontakt mit der wäßrigen Flüssigkeit, welche Metallionen abgibt und der, welche sie aufnimmt. Das überführen der Metallionen erfolgt somit durch Komplexierung an einer Membranoberfläche, Diffusion der Komplexe durch das Porensystem und Freisetzung der Ionen an der anderen Membranoberfläche. Der Nachteil von Verfahren dieser Art besteht darin, daß der Komplexbildner aus dem Porensystem austreten und in die wäßrigen Flüssigkeiten eindringen kann. Dies kann hervorgerufen werden durch eine gewisse Löslichkeit des Komplexbildners in Wasser oder durch Druckschwankungen oder durch Turbulenzen in den wäßrigen Flüssigkeiten an den Membranoberflächen. Diese Verluste an Komplexbildner führen anfangs zu einer Verlangsamung des Prozesses, also zu einer Abnahme des Metallionenflusses und schließlich zum Stillstand des Verfahrens. Vor Wiederverwendung müssen die Membranen gereinigt und neu gefüllt werden.

Das o.a. Problem wird in anderen Verfahren dadurch umgangen, daß nicht ein stationär in Membranporen vorliegender Komplexbildner verwendet wird. Vielmehr wird die organische Flüssigkeit, welche den Komplexbildner enthält, von einer ersten Überführungszone zu einer zweiten geführt. In der ersten Überführungszone erfolgt die Aufnahme der Metallionen aus einer wäßrigen Flüssigkeit durch den Komplexbildner, in der zweiten deren Abgabe an eine andere wäßrige Flüssigkeit. Verfahren dieser Art, die nach dem Prinzip von Extraktion und Trennung flüssiger Systeme mittels Abscheiden arbeiten, sind in Chemical Engineering 1970, Seite 82 ff und in der US-PS-3 939 203 beschrieben. Diese Verfahren weisen ebenfalls Nachteile auf. So können aus der Metallionen abgebenden wäßrigen Flüssigkeit unerwünschte Beimengungen in die organische Flüssigkeit gelangen, während die beiden intensiv gemischt werden. Diese Beimengungen müssen dann vor einer Rückgewinnung der reinen Metalle durch Reinigungsoperationen entfernt werden.

Die DE-OS-25 50 006 beschreibt ein Verfahren, bei dem eine organisce, Komplexbildner enthaltende Phase, welche im Kreislauf geführt werden kann, aus einer wäßrigen Flüssigkeit Metallionen aufnimmt und sie an eine andere wäßrige Flüssigkeit wieder abgibt. Beide wäßrigen Flüssigkeiten werden hierbei durch Membranen von der organischen Phase getrennt gehalten. Dieses Verfahren hat den Nachteil, daß der Fluß, d.h. die pro Zeiteinheit von der einen wäßrigen Flüssigkeit in die andere überführte Menge an Metallionen, limitiert ist, bedingt durch die Verwendung von Membranen sowohl auf der sog. "feed"als auch auf der "strip"-Seite (auf der "feed"-Seite erfolgt die Überführung der Ionen von der wäßrigen in die organische, auf der "strip"-Seite von der organischen in die wäßrige Phase).

Der Entwicklung des erfindungsgemäßen Verfahrens lag somit die Aufgabe zugrunde, ein Verfahren zu schaffen, welches die erwähnten Nachteile nicht aufweist, welche insbesondere eine wirtschaftlichere Alternative zu bekannten Verfahren darstellt.

Die Lösung der Aufgabe besteht erfindungsgemäß in einem Verfahren gemäß Oberbegriff von Anspruch 1, das dadurch gekennzeichnet ist, daß man in der zweiten Überführungszone die Flüssigkeit B mit der Flüssigkeit Z mechanisch vermischt, aus diesem Gemisch wäßrige Phase durch einen mechanischen Abscheideprozeß abtrennt und die übrigen Anteile des Gemisches wieder in den Kreislauf zurückführt.

Das erfindungsgemäße Verfahren wird nunmehr im einzelnen beschrieben.

In einer ersten Überführungszone befindet sich die wäßrige Flüssigkeit A, welche die zu überführenden Metallionen enthält, in Kontakt mit jeweils einer der Oberflächen einer oder mehrerer mikroporöser hydrophober Membranen. An der jeweils anderen Oberfläche der Membran bzw. Membranen wird eine nichtwäßrige Flüssigkeit B vorbeigeführt, entweder in reiner Form oder als Gemisch mit wäßriger Phase, was unten näher erläutert wird. Die Flüssigkeit B ist in der Regel eine unpolare oder wenig polare organische Flüssigkeit und enthält mindestens einen Komplexbildner für die Metallionen. Sollen mehrere Arten von Metallionen gleichzeitig überführt werden, kann B auch mehrere Komplexbildner enthalten. Ein Teil der Gesamtmenge der Flüssigkeit B befindet sich in den Poren der hydrophoben Membran. Die Überführung der Metallionen aus der Flüssigkeit A in die Flüssigkeit B erfolgt somit an der A zugekehrten Membranoberfläche. Auf Grund von Konzentrationsgradienten und des Komplexbildungsgleichgewichts werden die Metallionen komplex gebunden und in die Flüssigkeit B überführt. Die Komplexe diffundieren durch die in den Poren vorliegende Flüssigkeit B wiederum auf Grund von Konzentrationsgradienten. Damit diese Diffusion mit einer akzeptablen Geschwindigkeit abläuft, muß B ein Lösungsmittel für die komplexierten Metallionen darstellen. An der anderen Membranoberfläche werden die Komplexe von dem im Kreislauf geführten Anteil der Flüssigkeit B mitgenommen und zu einer zweiten Überführungszone geführt. In dieser Zone werden die Metallionen aus ihren Komplexen freigesetzt und an eine wäßrige Flüssigkeit Z abgegeben. Die Abgabe der Metallionen aus der Flüssigkeit B an die Flüssigkeit Z erfolgt in dieser Zone, also auf der strip-Seite, durch mechanisches Vermischen von B mit Z. Da die Flüssigkeiten B und Z im ruhenden Zustand nicht miteinander vermischbar sind, muß dieses mechanische Vermischen eine innige Vermengung der beiden Phasen beinhalten, was z. B. durch einen Rührer bewerkstelligt werden kann. Ein intensives Rühren fördert hierbei das Vermischen und erhöht den Metallionenfluß von der Flüssigkeit B in die Flüssigkeit Z. Im Anschluß an das mechanische Vermischen erfolgt ein Abtrennen wäßriger Phase aus dem Gemisch. Diese Abtrennung wird durch einen mechanischen Abscheideprozeß bewerkstelligt. Das erfindungsgemäße Verfahren ist kontinuierlich durchführbar. Auf eine Verwendung von Membranen, welche in der ersten Überführungszone unerläßlich ist, wird also in der zweiten verzichtet, da die Flüssigkeit B keine unerwünschten Beimengungen enthält. Die Flüssigkeit A dagegen kann solche enthalten, entweder in gelöster oder in dispergierter Form. In A dispergierte Beimengungen gelangen wegen ihrer Teilchengrößen bzw. ihrer Polarität nicht in die in den Mikroporen der Membran vorliegende Flüssigkeit B. In der Flüssigkeit A gelöste Beimengungen dringen wegen ihrer Polarität nicht in die Poren der hydrophoben Membran und in die unpolare Flüssigkeit B ein.

Das mechanische Vermischen der Flüssigkeiten B und Z kann z. B. in einem größeren Gefäß unter Einsatz eines schnell laufenden Rührers erfolgen. Der mechanische Abscheideprozeß, der sich daran anschließt und durch den aus dem Gemisch wäßrige Phase wieder abgetrennt wird, macht von der Tatsache Gebrauch, daß die Flüssigkeiten B und Z im ruhenden Zustand nicht miteinander mischbar sind. Das durch mechanisches Vermischen erhaltene Gemisch trennt also beim Stehenlassen in die beiden Phasen. Das Abtrennen wäßriger Phase kann somit durch einen Dekanter oder Separator oder ähnliche Vorrichtungen erfolgen.

Gegebenenfalls kann zusätzlich mit einer "Koaleszenzpatrone" gearbeitet werden, wenn eine gewisse Emulgierung der einen Phase in der anderen stattgefunden hat.

Eine solche "Koaleszenzpatrone" dient zur rascheren Koagulation emulgierter Flüssigkeit und kann z. B. aus einem Metallrohr, gefüllt mit dicht gepackten Polyesterfasern, bestehen, durch das das Gemisch der Flüssigkeiten B und Z geleitet wird.

Das mechanische Vermischen und der mechanische Abscheideprozeß können daneben ggf. bei einer anderen Temperatur als Raumtemperatur durchgeführt werden, z. B. um die Phasentrennung zu beschleunigen.

Der mechanische Abscheideprozeß kann so durchgeführt werden, daß nichtwäßrige und wäßrige Phase vollständig getrennt werden und nur die nichtwäßrige Flüssigkeit B wieder der ersten Überführungszone zugeführt wird. In einer bevorzugten Ausführungsform des erfindungsgemäßen Verfahrens wird jedoch nur ein Teil der in dem Gemisch enthaltenen wäßrigen Phase abgetrennt, so daß ein Gemisch aus nichtwäßriger Flüssigkeit (B) und wäßriger Flüssigkeit (Z) in den Kreislauf zurück- und wieder der ersten Überführungszone zugeführt wird. Diese Verfahrensvariante der unvollständigen Trennung hat gegenüber dem o.a. Verfahren der vollständigen Trennung den Vorteil, daß der hierfür erforderliche mechanische Abscheideprozeß schneller beendet ist. Außerdem wird beim erneuten Vermischen des aus der ersten Überführungszone kommenden Gemischs mit neuer Flüssigkeit Z eine geringere Menge an frisch zuzusetzender Flüssigkeit Z benötigt und der Mischvorgang ist schneller beendet. Es kann bei dieser Verfahrensvariante auch deshalb eine kürzere Zeit für das Vermischen des Gemischs mit neuer Flüssigkeit Z eingehalten werden, weil mindestens ein Teil der Metallionen, die in der ersten Überführungszone in das Gemisch gelangen, bereits vor dem Vermischen mit neuer Flüssigkeit Z in die wäßrige Phase des Gemischs überführt worden ist. Insgesamt ist also das Verfahren der unvollständigen Trennung dem der vollständigen Trennung wegen des geringeren Zeitaufwands überlegen.

Die Verfahrensvariante der unvollständigen Trennung kann auf mehrere Arten durchgeführt werden. Zwei Möglichkeiten sind im Folgenden unter a) und b) beschrieben:

a) Man führt nur einen Teil des im Kreislauf vorhandenen Gemischs der Flüssigkeiten B und Z (nach dem Passieren der Mischvorrichtung) dem mechanischen Abscheideprozeß zu, trennt diesen Teil vollständig in organische und wäßrige Phase und führt die organische Phase in den Kreislauf zurück.

Diese Variante wird durch die unten beschriebenen Ausführungsbeispiele 2 bis 4 veranschaulicht

b) man führt die Gesamtmenge des Gemischs dem Abscheideprozeß zu und trennt dort unvollständig, nämlich in eine reine bzw. nahezu reine wäßrige Phase einerseits und ein Gemisch aus organischer und wäßriger Phase andererseits. Das nach der Trennung erhaltene Gemisch wird in den Kreislauf zurückgeführt, die reine wäßrige Phase als Produktlösung abgeführt.

Die Entscheidung für a) oder b) hängt von den speziellen Gegebenheiten des durchzuführenden Verfahrens ab. Während Variante a) universell durchführbar ist, kann Variante b) nur gewählt werden, wenn sich aus dem Gemisch im ruhenden Zustand zuerst wäßrige Phase, nicht aber organische Phase, in reiner Form abscheidet. Andererseits kann Variante b) gegebenenfalls der Variante a) überlegen sein, nämlich dann, wenn die vollständige Trennung in zwei reine Phasen lange Zeit in Anspruch nimmt.

Aus der nach dem mechanischen Abscheideprozeß erhaltenen wäßrigen Phase, die sich von der Flüssigkeit Z durch einen höheren Gehalt an Metall und ggf. durch den pH-Wert unterscheidet, kann Metall aus den Ionen in reiner Form erhalten werden. In manchen Fällen ist es vorteilhaft, vor der Gewinnung der Metalle die wäßrige Phase einer Reinigungsoperation zu unterziehen. Diese Reinigungsoperation kann z. B. in einer nochmaligen mechanischen Abscheidung bestehen, z. B. um ggf. letzte Reste der organischen Phase B aus der wäßrigen Phase zu entfernen.

Das erfindungsgemäße Verfahren weist gegenüber bekannten Verfahren u.a. folgende Vorteile auf:

a) der Metallionenfluß auf der strip-Seite, d.h. die pro Zeiteinheit überführte Menge an Ionen, ist größer. Dies ist eine Folge der mechanischen Vermischung der Phasen B und Z.

b) die Apparatur zur Durchführung des Verfahrens ist einfach

c) eine Desaktivierung der Membranen auf der feed-Seite durch Auswaschung wird verhindert, da ständig Flüssigkeit B aus dem Kreislauf in die Poren eindringen und Verluste ersetzen kann.

Nachdem die Flüssigkeit B oder das Gemisch aus den Flüssigkeiten B und Z die zweite Überführungszone verlassen hat, kann sie bzw. es wieder direkt in die erste zurückgeführt werden, um erneut Metallionen aufzunehmen. Es können sich aber im Kreislauf von B weitere Überführungszonen befinden, deren Anzahl eine gerade Zahl ist. Auf diese Weise kann die Flüssigkeit B abwechselnd in einer Zone Metallionen aus der Flüssigkeit A aufnehmen und in der darauffolgenden an die Flüssigkeit Z abgeben und umgekehrt. Eine bevorzugte Ausführungsform des erfindungsgemäßen Verfahrens ist somit dadurch gekennzeichnet, daß man die Flüssigkeit B im Kreislauf durch mehr als zwei Überführungszonen führt, wobei deren Gesamtzahl eine gerade Zahl ist und wobei B abwechselnd in einer Überführungszone Metallionen aus der Flüssigkeit A aufnimmt und in der darauffolgenden an die Flüssigkeit Z abgibt und umgekehrt. Der hierdurch erzielbare Vorteil, nämlich eine erhöhte Menge an in der Zeiteinheit überführten Metallionen, läßt sich prinzipiell bis zu einem gewissen Ausmaß zwar auch bei Verwendung von nur zwei Überführungszonen erzielen, z. B. durch größere Dimensionierung oder Verwendung einer größeren Anzahl von Hohlfadenmembranen für die Überführung der Metallionen von A nach B. Die Verwendung mehr als die Überführungszonen bietet jedoch demgegenüber den Vorteil, daß handelsübliche Vorrichtungen verwendet werden können, während bei größeren Dimensionierungen Spezialanfertigungen nötig werden können. Darüber hinaus ist eine größere Dimensionierung über Vergrößerung der Länge der Membranen nur bis zu einem gewissen Grad sinnvoll, wenn nicht einer der Vorteile des Verfahrens abgeschwächt werden soll. Dieser Vorteil besteht in hohen Konzentrationsgradienten der Metallionen zwischen den Flüssigkeiten A und B, da B niedrig mit Metallionen beladen in die erste Überführungszone eintritt und sich erst längs der Membran mit Metallionen anreichert. Bei großer Dimensionierung der Vorrichtung kann gegebenenfalls eine sehr starke Anreicherung der Flüssigkeit B mit Metallionen stattfinden, und es können daher die Flußwerte, d.h. die Menge an pro Zeiteinheit überführten Metallionen, infolge sinkender Konzentrationsgradienten niedriger liegen als bei Verwendung von mehr als zwei Austauschvorrichtungen kleinerer Dimensionen. In letzterem Fall gibt nämlich die Flüssigkeit B die Metallionen an die Flüssigkeit Z ab, bevor sie erneut beladen wird. Bei Verwendung von mehr als zwei Überführungszonen kann jede zweite von einem gemeinsamen Reservoir der Flüssigkeit A gespeist werden, während die in den übrigen Überführungszonen erhaltenen Anteile an mit Metallionen angereicherter wäßriger Phase ein gemeinsames Reservoir einer wäßrigen Flüssigkeit speisen können. Die Flüssigkeit A wird auch hierbei in den entsprechenden Überführungszonen in der beschriebenen Weise durch Membranen von der Flüssigkeit B getrennt gehalten.

Neben der oben beschriebenen Ausführungsform, bei der die Flüssigkeit B abwechselnd Metallionen aus der Flüssigkeit A aufnimmt und an die Flüssigkeit Z abgibt, ist jedoch auch eine Serienschaltung von Überführungszonen möglich. Diese Ausführungsform besteht beispielsweise darin, daß die Flüssigkeit B in mehreren hintereinandergeschalteten Überführungszonen jeweils Metallionen aus einer Flüssigkeit A aufnimmt, bevor sie die Metallionen an die Flüssigkeit Z abgibt.

Um hohe Konzentrationsgradienten zwischen den Flüssigkeiten A und B zu erreichen, besteht eine bevorzugte Ausführungsform darin, daß die Flüssigkeit A im Kreislauf geführt wird, wobei sie in gleicher Richtung oder in Gegenrichtung zur Strömungsrichtung der Flüssigkeit B bzw. des Gemisches der Flüssigkeiten B und Z an den Membranoberflächen geführt werden kann. Die Flüssigkeit A kann aber auch stationär vorliegen.

Um in der Flüssigkeit A die elektrische Neutralität aufrecht zu erhalten, können z. B. Anionen gleichzeitig und gleichsinnig mit den Metallionen überführt werden. Geeignet für diese Variante sind z. B. Kronenäther, wie sie in Journal of Membrane Science $\underline{9}$ (1981) Seiten 83 ff beschrieben werden, da Kronenäther auch Anionen mitführen können. Die Kronenäther eignen sich jedoch auch für das unten beschriebene Verfahren des gekoppelten Counter-Transports. Ihre Verwendung stellt eine bevorzugte Ausführungsform des Verfahrens dar. Neben den unsubstituierten Kronenäthern sind auch Derivate der Kronenäther wie Substituenten tragende Kronenäther geeignet.

Die hier vorgestellte Verfahrensvariante, bei der Kationen und Anionen in gleicher Richtung, nämlich von der Flüssigkeit A über die Flüssigkeit B in die Flüssigkeit Z transportiert werden, bezeichnet man als gekoppelten Co-Transport. Sie kann neben der Gewinnung von Metallen aus ihren Kationen auch zur Gewinnung von Metallen aus ihren Anionen, z. B. Chromatanionen dienen und wird z. B. für Chrom- und Uranabscheidung angewandt. In diesem Fall, wo Metalle aus Anionen zurückgewonnen werden sollen, dient die gleichzeitige Überführung der Kationen der Aufrechterhaltung der elektrischen Neutralität in der Flüssigkeit A. Die Kationen können in diesem Fall Wasserstoffionen sein. Der in der Flüssigkeit B enthaltene Komplexbildner ist hierbei bevorzugt ein Vertreter aus der oben erwähnten Klasse der Kronenäther. Führt man das Verfahren des gekoppelten Co-Transports so durch, daß der Konzentrationsgradient der Kationen zwischen den Flüssigkeiten A und Z größer ist als der entsprechende Konzentrationsgradient der Anionen, so können Anionen auch gegen ihren Konzentrationsgradienten von A nach Z überführt werden. d.h. der Transport der Anionen von A nach Z findet selbst dann statt, wenn ihre Konzentration in Z größer ist als in A.

Besonders bevorzugt ist es, die elektrische Neutralität in den wäßrigen Flüssigkeiten dadurch aufrecht zu erhalten, daß man einen sogenannten gekoppelten Counter-Transport durchführt, bei dem Kationen X, die mit den Metallionen nicht identisch sind, in Gegenrichtung überführt werden. Zum einen bietet dieses Verfahren den Vorteil, daß auch Komplexbildner verwendet werden können, welche zum Transport von Anionen ungeeignet, aber z. B. wegen ihrer Selektivität für manche Metallionen erwünscht sind. Besonders geeignete Komplexbildner dieser Art sind chelatbildende Hydroxyoxime, wie sie in Journal of Membrane Science $\underline{2}$ (1977) Seiten 213 ff beschrieben sind. Eine bevorzugte Ausführungsform des erfindungsgemäßen Verfahrens besteht also darin, daß man bei der Verfahrensvariante des gekoppelten Counter-Transports chelatbildende Hydroxyoxime als Komplexbildner verwendet. Andere geeignete Komplexbildner sind organische Phosphorsäurederivate wie z. B. Phosphorsäure-di-(2-äthylhexyl)-ester und organische Phosphinoxide, z. B. Trioctylphosphinoxid, sowie Amine z. B. Trioctylamin.

Gekoppelte Counter-Transportverfahren besitzen hinaus den großen Vorteil, daß Metallionen gegen ihren Konzentrationsgradienten überführt werden können. Dies bedeutet, daß ein Überführen von Metallionen aus der Flüssigket A über die Flüssigkeit B in die Flüssigkeit Z möglich ist, selbst wenn die Konzentration der Metallionen in Z bereits größer ist als in A. Dies wird ermöglicht, wenn der Konzentrationsgradient der Kationen X noch größer ist und die Triebkraft liefert. Das Verfahren läuft dann so lange ab, wie $\frac{X_Z}{X_A}$ größer ist als $\frac{M_Z}{M_A} \cdot \frac{n_M}{n_X}$. Hierbei bedeuten $X_A$ und $X_Z$ die Konzentrationen der Kationen X in den Flüssigkeiten A bzw. Z, $M_A$ und $M_Z$ die entsprechenden Konzentrationen der Metallionen und $n_M$ und $n_X$ die Wertigkeiten der Metallionen bzw. der Kationen X. Bevorzugt verwendet man Wasserstoffionen als Kationen X. Die o.a. Bedingung bedeutet dann, daß die Flüssigkeit Z stärker sauer sein muß als die Flüssigkeit A. In der Regel liegt der pH-Wert von Z bei 0,5 bis 1,5, der von A bei 2,5 bis 6. Um die o.a. Bedingung über längere Zeit aufrechtzuerhalten, empfiehlt es sich, in der Flüssigkeit A durch Neutralisieren der übergeführten Wasserstoffionen einen weitgehend konstanten pH-Wert beizubehalten, was z. B. durch Zugabe eines Puffers geschehen kann.

Eine bevorzugte Ausführungsform des Verfahrens ist somit dadurch gekennzeichnet, daß gekoppelt mit dem Überführen der Metallionen ein Überführen von Kationen X, die mit den Metallionen nicht identisch sind, in Gegenrichtung zur Überführung der Metallionen durchgefürt wird, wobei die Kationen X in der Flüssigkeit B ebenfalls in Form von gelösten Komplexen vorliegen. Die Kationen X müssen hierbei in der Flüssigkeit B deshalb als gelöste Komplexe vorliegen, damit sie schnell aus der Flüssigkeit Z in die Flüssigkeit A überführt werden können. Der bzw. die in der Flüssigkeit B vorhandene(n) Komplexbildner muß bzw. müssen also auch die Kationen X komplexieren, und B muß ein Lösungsmittel für die komplexierten Kationen X darstellen.

Für den Fall des gekoppelten Counter-Transports ist es weiterhin bevorzugt, daß die Konzentration $(X_Z)$ von X in Z größer ist als die Konzentration $(X_A)$ von X in A und daß $\frac{X_Z}{X_A}$ mindestens zu Beginn des Verfahrens größer ist als $\frac{M_Z}{M_A} \cdot \frac{n_M}{n_X}$, wobei $M_A$ und $M_Z$ die Konzentration der

Metallionen in den Flüssigkeiten A bzw. Z und wobei $n_M$ und $n_X$ die Wertigkeiten der Metallionen bzw. der Kationen X bedeuten.

Ferner besteht eine bevorzugte Variante darin, daß $M_Z$ größer ist als $M_A$.

Weiter bevorzugte Ausführungsformen bestehen darin, daß die Kationen X Wasserstoffionen sind und für diesen Fall darin, daß in der Flüssigkeit A durch Neutralisieren der übergeführten Wasserstoffionen ein weitgehend konstanter pH-Wert aufrechterhalten wird.

Für das erfindungsgemäße Verfahren werden mikroporöse hydrophobe Membranen verwendet.

Mikroporöse Membranen im Sinn der vorliegenden Erfindung sind Membranen, welche mittlere Porendurchmesser etwa im Bereich von 0,05 μm bis 10 μm aufweisen. Entscheidend für ihre Eignung für ein bestimmtes Verfahren ist hierbei jeweils der Durchmesser an der engsten Stelle, welche ein Teilchen passieren muß, das von einer Membranoberfläche an die andere gelangen soll.

Für das erfindungsgemäße Verfahren besonders geeignet sind aus der Gruppe der mikroporösen Membranen solche, welche ein sogenanntes verzelltes Porensystem aufweisen. Im Innern der Membran sind hier neben den Poren annähernd kugelförmige Zellen vorhanden, welche durch Verbindungsporen miteinander verbunden sind. Die Zellen können dabei mittlere Durchmesser von etwa 0,5 μm bis etwa 100 μm besitzen. Die Verbindungskanäle, welche die Poren darstellen, bestimmen, ob ein bestimmtes Teilchen noch durch die Membran hindurch gelangen kann und weisen in der Regel mittlere Durchmesser von etwa 0,05 bis 10 μm auf. Membranen dieser Struktur sind deshalb für das erfindungsgemäße Verfahren besonders geeignet, weil sie die überwiegende Zahl der sich anbietenden Komplexbildner in das Porensystem aufnehmen können, nicht aber in der Flüssigkeit A dispergierte Verunreinigungen größerer Teilchenaggregationen.

Für das erfindungsgemäße Verfahren geeignete Porenstrukturen sind u.a. in der DE-OS 27 37 745 beschrieben.

Die Verwendung von Membranen, welche ein verzelltes Porensystem aufweisen, das aus Zellen und Verbindungsporen zwischen den Zellen besteht, stellt eine bevorzugte Ausführungsform des erfindungsgemäßen Verfahrens dar.

Bei diesen Membranstrukturen lassen sich, begründet u.a. durch das Vorhandensein der Zellen, große Porenvolumina einstellen, d.h. Porenvolumina von 65-85 % des Gesamtvolumens der Membran. Größere Porenvolumina, das sind die Volumina der Zellen und der Verbindungsporen zusammengenommen, ermöglichen es, eine größere Menge der Flüssigkeit B im Porensystem unterzubringen und führen damit zu einer größeren Menge an Metallionen, welche in der Zeiteinheit durch die Membran diffundieren können. In einer bevorzugten Ausführungsform des erfindungsgemäßen Verfahrens beträgt deshalb das Porenvolumen der Membranen 65-85 % ihres Gesamtvolumens. In einer weiteren bevorzugten Ausführungsform beträgt das Porenvolumen 70-80 % des Gesamtvolumens.

Die Wandstärke der verwendeten Membranen kann, was die Durchführbarkeit des Verfahrens betrifft, nahezu beliebig gewählt werden, lediglich nach unten existieren Grenzwerte, bedingt durch die Stabilitätsanforderungen an die Membran. Da die verwendeten Flüssigkeiten gewisse Drucke auf die Membran ausüben, können bei großen Porenvolumina Stabilitätsgründe eine untere Grenze für die Wandstärke festlegen. Da andererseits größere Wandstärken zu längeren Diffusionswegen für die Metallionenkomplexe führen, ist es zweckmäßig, nicht zu große Wandstärken zu verwenden. In einer bevorzugten Ausführungsform des erfindungsgemäßen Verfahrens beträgt daher die Wandstärke der Membranen etwa 50 μm bis etwa 400 μm. In einer weiteren bevorzugten Ausführungsform beträgt die Wandstärke etwa 50 μm bis 300 μm.

Die für das erfindungsgemäße Verfahren verwendeten Membranen sind hydrophob. Darunter ist zu verstehen, daß die innere Oberfläche der Membranen, welche durch die Oberflächen der Zellen und der Poren zusammen gebildet wird, hydrophob sein muß. Dies läßt sich entweder dadurch erzielen, daß man für die gesamte Membran ein hydrophobes Material verwendet, oder indem man Membranen aus einem an und für sich nicht hydrophoben Material verwendet. deren innere Oberfläche hydrophobiert ist. Dies kann z. B. bei Vorliegen einer hydrophobierenden Beschichtung der Fall sein. Durch die Hydrophobie wird einerseits gewährleistet, daß die unpolare oder sehr wenig polare, mit Wasser nicht oder nicht nennenswert mischbare Flüssigkeit B leicht in die Membranporen eindringt, da hydrophobe Membranen durch unpolare Flüssigkeiten gut benetzt werden. Andererseits verhindert die Hydrophobie des Membranmaterials das Eindringen von Wasser bzw. der Flüssigkeiten A und Z, da wäßrige Flüssigkeiten gegenüber diesen Materialien wesentlich höhere Benetzungsdrucke aufweisen als unpolare organische Flüssigkeiten. Der Benetzungsdruck ist derjenige Druck, den eine Flüssigkeit mindestens aufweisen muß, um in das Porensystem einer Membran eindringen zu können. Er liegt für Wasser gegenüber hydrophobem Polypropylen bei etwa 2,5 bis 3 bar, wenn die Poren an ihrer jeweils engsten Stelle Durchmesser von etwa 0,4 μm aufweisen. Hierbei ist folgende Bestimmungsmethode für den Benetzungsdruck zugrunde gelegt: Aus dem zu untersuchenden Membranmaterial wird ein Hohlfaden mit einer Wandstärke von ca. 100-200 μm hergestellt. Die Porenstruktur des Hohlfadens soll in etwa mit dem der später zu verwendenden Membran übereinstimmen. Das Lumen des gereinigten und getrockneten Hohlfadens wird mit der zu untersuchenden Flüssigkeit gefüllt, deren Druck daraufhin langsam erhöht wird. Der Benetzungsdruck ist derjenige Druck, bei welchem der erste Flüssigkeitstropfen aus der äußeren Hohlfadenoberfläche austritt, was leicht visuell festgestellt werden kann. Da die wäßrigen Flüssigkeiten bei dem erfindungsgemäßen Verfahren Drucke unterhalb derjenigen Benetzungsdrucke aufweisen, die sie gegenüber den hydrophoben Materialien besitzen, wird ein Eindringen von Wasser sowie von darin gelösten polaren Beimengungen verhindert. Lediglich die durch Komplexbildung in der Flüssigkeit B in Lösung gehenden Metallionen vermögen in das Porensystem einzudringen.

Hydrophobe Membranen, welche für das erfindungsgemäße Verfahren geeignet sind, bestehen z. B. aus Polyolefinen oder halogenierten Polyolefinen. Als besonders geeignet haben sich Membranen aus Polypropylen wie z. B. Accuel ® (Fa. Enka AG, Wuppertal) erwiesen. Die Verwendung von Membranen aus Polypropylen stellt eine bevorzugte Ausführungsform des erfindungsgemäßen Verfahrens dar. Auch Membranen aus Polyvinylidenfluorid lassen sich vorteilhaft einsetzen. Die Hydrophobie der Membranen allein würde nicht ausreichen, um das Eindringen von Wasser oder polaren in Wasser gelösten Beimengungen in die Membran zu verhindern, wenn dieses Eindringen über eine Vermischung mit der Flüssigkeit B erfolgen würde. Aus diesem Grund darf B mit den Flüssigkeiten A und Z nicht oder nicht nennenswert mischbar sein. Darunter ist zu verstehen, daß die Löslichkeit von B in A und in Z sowie die Löslichkeit von A und von Z in B nicht größer sein darf als etwa 0,5 bis 1 g/l.

Für die Membranen können mikroporöse hydrophobe Materialien z. B. in Form von Flach- oder Spiralmembranen verwendet werden. Als besonders geeignet haben sich jedoch Membranen in Form von Hohlfäden oder Rohren erwiesen, da diese große Oberflächen bei relativ niedrigem Volumen aufweisen. In einer bevorzugten Ausführungsform des Verfahrens werden daher als Membranen Hohlfäden oder Rohre verwendet. Eine weiter bevorzugte Ausführungsform des erfindungsgemäßen Verfahrens besteht darin, daß die Hohlfäden bzw. Rohre senkrecht angeordnet sind und die nichtwäßrige Flüssigkeit B bzw. das Gemisch der Flüssigkeiten B und Z jeweils von oben nach unten an den Oberflächen der Hohlfäden oder Rohren vorbeigeführt wird. B bzw. das Gemisch aus B und Z kann dabei außen an den Membranen oder durch deren Lumina geführt werden. Durch das Führen jeweils von oben nach unten wird ein Druckabfall der Flüssigkeit B längs der Hohlfäden oder Rohre durch den hydrostatischen Druck ganz oder teilweise kompensiert. Diese Kompensierung eines sonst stattfindenden Druckabfalls führt zu einer Vergleichmäßigung des Metallionentransports über die gesamte Membranlänge.

Die Flüssigkeit B kann aus einem oder mehreren Komplexbildnern ohne weitere Zusätze bestehen. Eine bevorzugte Ausführungsform besteht jedoch darin, daß B die Lösung eines oder mehrerer Komplexbildner(s) in einem unpolaren Lösungsmittel oder Lösungsmittelgemisch ist. Da die Diffusionsgeschwindigkeit der Metallionenkomplexe im Porensystem von der Viskosität der Flüssigkeit B abhängt, ist häufig Zusatz eines niedrigviskosen Lösungsmittels vorteilhaft.

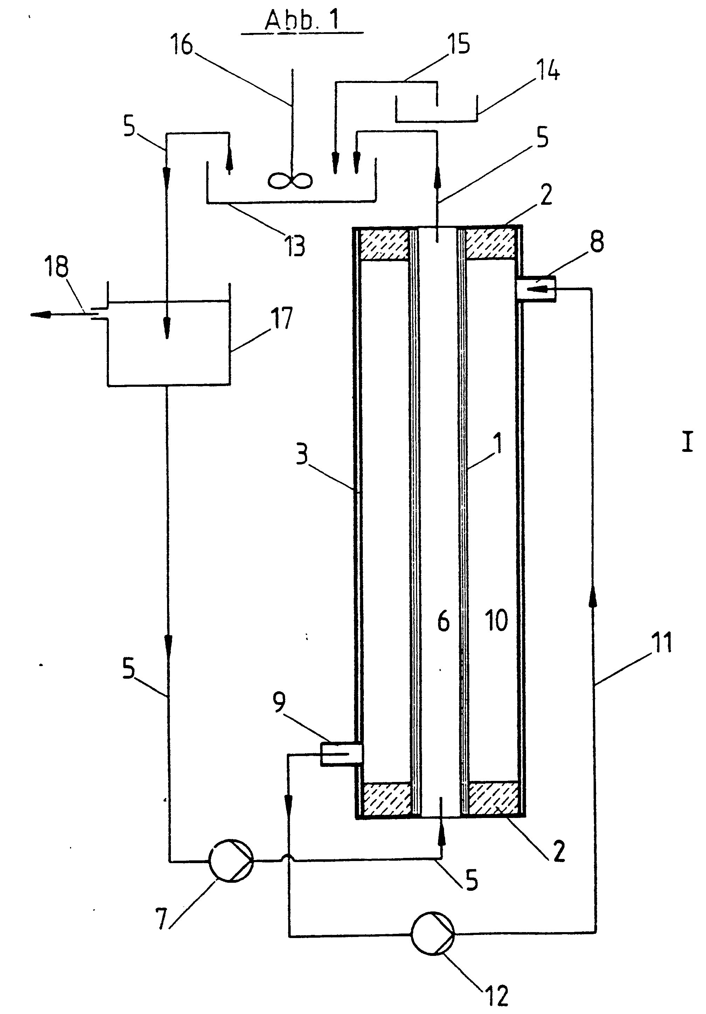

Eine vereinfachte schematische Darstellung einer Ausführungsform des erfindungsgemäßen Verfahrens ist in Abbildung 1 wiedergegeben.

Zur Vereinfachung ist hierbei für die erste Überführungszone, welche mit I bezeichnet ist, nur ein Hohlfaden 1 dargestellt. Der Hohlfaden ist über eine Einbettmasse 2 an seinem oberen und unteren Ende mit einem Gehäuse 3 verbunden. Die Flüssigkeit B bzw. das Gemisch der Flüssigkeiten B und Z folgt in einem Leitungssystem dem durch die Linie 5 angegebenen Weg und strömt durch das Lumen 6 des Hohlfadens. In der Flüssigkeitsleitung 5 ist eine Pumpe 7 angebracht, welche die Flüssigkeit B im Kreislauf fördert. Das Gehäuse 3 weist eine Zu- und Ableitung für Flüssigkeit auf. Die Zuleitung ist mit 8, die Ableitung mit 9 gekennzeichnet. Im Gehäuse 3, welches in der Überführungszone I vorliegt, befindet sich in der Kammer 10 die wäßrige Flüssigkeit A. A kann über die Flüssigkeitszu und -ableitung entlang des durch die Linie 11 dargestellten Weges im Kreislauf in Gegenrichtung zu der Flüssigkeit B geführt werden. Zu diesem Zweck kann eine Pumpe 12 dienen. Entlang des Weges 11 kann ein größerer, nicht dargestellter Vorratsbehälter für die Flüssigkeit A vorliegen. Das Überführen der Metallionen von A nach B findet an der der Kammer 10 zugekehrten Oberfläche der Hohlfadenmembran 1 statt. Am Gehäuse 3 sowie an den Flüssigkeitsleitungen können nicht dargestellte Heizmäntel angebracht sein.

Die Flüssigkeit B bzw. das Gemisch aus den Flüssigkeiten B und Z tritt nach dem Verlassen des Lumens 6 in eine Mischvorrichtung 13 ein. Dort wird aus einem Vorratsbehälter 14 Flüssigkeit Z über die Leitung 15 zugespeist. Mittels eines Rührers 16 erfolgt mechanisches Vermischen der Flüssigkeit B mit der Flüssigkeit Z. Nach dem Verlassen der Mischvorrichtung wird das Gemisch einer Vorrichtung 17, bestehend aus einem Dekanter, Separator o.ä. zugeführt, in welcher der mechanische Abscheideprozeß durchgeführt wird. Nach Abtrennen von wäßriger Phase aus dem Gemisch wird diese über die Leitung 18 der weiteren Aufarbeitung zugeführt, während die übrigen Anteile des Gemischs über die Leitung 5 wieder dem Kreislauf zugeführt werden.

Je nach den spezifischen Gewichten von abzutrennender wäßriger Phase und der in den Kreislauf zurückzuführenden Anteile (reine Phase B oder Gemisch aus wäßriger und organischer Phase) befindet sich die Stelle, an der abzutrennende wäßrige Phase aus der Vorrichtung 17 entnommen wird, im oberen oder unteren Bereich der Vorrichtung 17. Das die Vorrichtung 17 verlassende Gemisch aus wäßriger und organischer Phase kann, bevor es wieder der ersten Überführungszone zugeführt wird, noch einmal die Mischvorrichtung 13 oder eine andere Mischvorrichtung passieren, um dort intensiv mechanisch vermischt zu werden.

Zwischen der Mischvorrichtung 13 und der Abscheidevorrichtung 17 kann sich eine nicht dargestellte Koaleszenzpatrone der oben beschriebenen Art befinden, welche ein Koagulieren eventuell emulgierter Bestandteile fördert und somit die Trennung in der Vorrichtung 17 beschleunigt. Das erfindungsgemäße Verfahren wird nunmehr durch Beispiele veranschaulicht.

**Beispiel 1 (Vergleichsbeispiel)**

Bei diesem nicht erfindungsgemäßen Beispiel wurde auch auf der strip-Seite, d.h. in der zweiten Überführungszone, die Überführung der Metallionen (von der Flüssigkeit B in die Flüssigkeit Z) mittels Membranen bewerkstelligt. Ein direktes Vermischen der Flüssigkeiten B und Z erfolgte also nicht, vielmehr war die Flüssigkeit B von der Flüssigkeit Z durch mikroporöse hydrophobe Membranen getrennt gehalten, wie sie auch in der ersten Überführungszone verwendet wurden, um die Flüssigkeit A von der Flüssigkeit B getrennt zu halten.

Die beiden Membrananordnungen bestanden aus je 800 Hohlfäden aus mikroporösem verzelltem Polypropylen mit einem maximalen Porendurchmesser von 0,57 μm (Durchmesser an der engsten Stelle der Poren). Das Porenvolumen betrug 78 % des Gesamtvolumens der Hohlfäden. Die Hohlfäden besaßen eine Wandstärke von 150 μm, einen Innendurchmesser von 300 μm und eine Länge von 216 mm, so daß die gesamte innere Oberfläche jeder Hohlfadenanordnung ca. 0,16 m$^2$ betrug.

Die wäßrigen Flüssigkeiten A und Z durchströmten die Lumina der senkrecht angeordneten Hohlfäden der ersten bzw. zweiten Membrananordnung jeweils von oben nach unten. Die den Komplexbildner enthaltende organische Flüssigkeit B wurde vom Außenraum der Hohlfäden der ersten Anordnung zum Außenraum der Hohlfäden der zweiten Anordnung und wieder zurückgeführt. B strömte dabei an der äußeren Oberfläche der Hohlfäden jeweils von unten nach oben. Die Flüssigkeiten A und B wurden mit einem Durchsatz von je etwa 250 l/h im Kreislauf geführt, die Flüssigkeit Z mit etwa 400 l/h. Das Gesamtvolumen von A betrug 6 l, von B 5,3 l, von Z 7 l.

Die Flüssigkeit A war eine Lösung von CuSO$_4$ in VE-Wasser. Der pH-Wert wurde anfänglich durch Schwefelsäure auf 3,5 eingestellt und während des Verfahrens durch Zugabe von wäßriger NaOH bei etwa 3,5 gehalten. Die Konzentration an Cu$^{2+}$-Ionen betrug am Anfang 2286 ppm.

Die Flüssigkeit Z war zu Beginn des Verfahrens eine Lösung von Schwefelsäure in Wasser und war frei von Cu-Ionen. Der pH-Wert betrug zu Beginn des Verfahrens 0,4.

Die Flüssigkeit B bestand aus einer 10 (Gew.- %)-prozentigen Lösung von LIX ® 63/70 in Kerosin und war zu Beginn des Verfahrens frei von Cu.

Nach etwa 4 Stunden Laufzeit war der Gehalt an Cu$^{2+}$-Ionen in der Flüssigkeit A auf 610 ppm abgesunken. Nach 21 Stunden Laufzeit wurde in der Flüssigkeit Z ein Gehalt von 1428 ppm Cu bestimmt.

Der Fluß an Cu-Ionen zwischen A und B betrug 26.2 μg/cm$^2$·min (Durchschnittswert über die ersten 4 Stunden Laufzeit). Der Fluß an Cu-Ionen zwischen B und Z betrug 5.1 μg/cm$^2$·min (Durchschnittswert im Zeitraum von etwa 4 Std. nach Beginn bis 21 Std. nach Beginn).

Es wird angenommen, daß der Unterschied in den Flußwerten zwischen der feed-Seite (erste Überführungszone) und der strip-Seite (zweite Überführungszone) auf die Geschwindigkeiten der entsprechenden chemischen Reaktionen - Komplexierung bzw. Freisetzung der Metallionen aus den Komplexen-zurückzuführen ist. Eine kontinuierliche Durchführung des Verfahrens unter den hier genannten Bedingungen ergibt somit einen Gesamtfluß der Metallionen von ca. 5.1 μg/cm$^2$·min, wobei sich dieser Wert nach längeren Laufzeiten, als sie hier angewandt wurden, noch ändern kann.

**Beispiel 2 (erfindungsgemäß)**

Es wurde nach dem oben beschriebenen Verfahren der unvollständigen Trennung gearbeitet, d.h. ein Gemisch aus nichtwäßriger Flüssigkeit B und wäßriger Flüssigkeit Z wurde im Kreislauf geführt.

In der ersten Überführungszone wurde die wäßrige Flüssigkeit A von dem Gemisch aus B und Z durch Hohlfadenmembranen getrennt gehalten. Die Hohlfadenmembranen waren die gleichen wie unter Beispiel 1. In den Poren der Membranen lag, wie oben erläutert, nur Flüssigkeit B, nicht aber ein Gemisch aus B und Z vor.

Nachdem das Gemisch aus B und Z die erste Überführungszone verlassen hatte, wurde in den Kreislauf dieses Gemisches frische Flüssigkeit Z zugespeist. Das mit frischer Flüssigkeit Z angereicherte Gemisch wurde in einem Rührgefäß mechanisch vermischt. Die Rührvorrichtung bestand aus einem mit einer Füllstandsregelung versehenen Glasgefäß von etwa 1,5 l Fassungsvermögen. Zum mechanischen Vermischen diente ein Anker. Nach dem mechanischen Vermischen wurde ein Teil des Gemisches aus der Mischvorrichtung entnommen, während der Rest des Gemisches im Kreislauf verblieb.

Der entnommene Anteil des Gemisches durchlief zuerst eine Koaleszenzpatrone, bestehend aus dicht gepackten Polyesterfasern mit einem Volumen von etwa 50 cm³. Anschließend wurde dieser Anteil des Gemisches einem Schwerkraftabscheider zugeführt. Dieser besaß ein Volumen von 300 cm³ und eine Höhe von 20 cm.

In diesem Schwerkraftabscheider wurde das Gemisch vollständig in organische und wäßrige Phase aufgetrennt. Die organische Phase wurde in den Kreislauf zurückgeführt. Die wäßrige Phase, die mit Metallionen angereichert war, wurde als Produktlösung abgeführt.

Das Verfahren wurde so durchgeführt, daß das Gesamtvolumen des im Kreislauf geführten Gemischs aus wäßriger und organischer Phase konstant blieb. Es wurde also im Mittel pro Zeiteinheit ein ebenso großes Volumen an frischer Flüssigkeit Z dem Kreislauf zugespeist, wie an der Abscheidevorrichtung an wäßriger Flüssigkeit entnommen wurde. Zur Kontrolle des Volumens diente die Füllstandsregelung an der Mischvorrichtung.

Die Flüssigkeit A war eine schwefelsaure wäßrige $CuSO_4$-Lösung mit einem pH-Wert von 3,5, der während des Verfahrens durch Zugabe von wäßriger NaOH konstant gehalten wurde. Ein Volumen von 6,6 l der Flüssigkeit A wurde mit 250 l/h im Kreislauf geführt. Der Gehalt an Cu der im Kreislauf geführten Flüssigkeit A wurde konstant bei 160 ppm gehalten. Dies geschah durch kontinuierliche Entnahme eines Teils der Flüssigkeit A aus dem Kreislauf und kontinuierliche Zudosierung einer $CuSO_4$-Lösung mit 2 000 ppm Cu, wobei das pro Zeiteinneit entnommene und zugeführte Volumen mit je 880 cm³/h gleich waren, so daß die im Kreislauf geführte Menge an A konstant ca. 6,6 l betrug.

Das im Kreislauf geführte Gemisch der Flüssigkeiten B und Z besaß ein Volumen von 6,6 l und bestand aus 10 Vol-% wäßriger Schwefelsäure und 90 Vol-% einer 10 (Gew.) %-igen Lösung von LIX® 63/70 in Kerosin. Der pH-Wert des Gemischs betrug 0,64, der Cu-Gehalt 13 000 ppm. Menge und Zusammensetzung des im Kreislauf geführten Gemischs wurden konstant gehalten durch die oben beschriebene Abtrennung eines Teils der wäßrigen Phase und entsprechende Einspeisung frischer Flüssigkeit Z in den Kreislauf. Die frisch zugespeiste Flüssigkeit Z war eine 3 %-ige wäßrige $H_2SO_4$ mit einem pH-Wert von 0,55. Die Zuspeisung erfolgte mit 100 cm³/h. Unter diesen Bedingungen betrug der Fluß an Cu 15,7 µg/cm²·min (bezogen auf die Gesamtfläche der Hohlfadenmembran der ersten Überführungszone).

Trotz der Tatsache, daß die Cu-Ionen gegen einen sehr hohen Konzentrationsgradienten (160 ppm gegen 13 000 ppm) überführt wurden, ergab sich also ein um den Faktor 3-4 höherer Fluß als in Beispiel 1.

**Beispiel 3 (erfindungsgemäß)**

Es wurde wie in Beispiel 2, jedoch mit folgenden Abweichungen gearbeitet:

Die in den Kreislauf von A zugespeiste Menge an frischer Flüssigkeit A hatte einen Cu-Gehalt von 2 200 ppm, und die Zuspeisung erfolgt mit 875 cm³/h.

Das im Kreislauf geführte Gemisch aus B und Z enthielt 35 Vol.-% wäßrige $H_2SO_4$ und 65 Vol.-% einer 10 Gew.-%-Lösung von LIX® 63/70 in Kerosin.

Der Cu-Gehalt des im Kreislauf geführten Gemischs betrug 8 100 ppm, der pH-Wert des Gemischs 0,53.

Die frisch zugespeiste Flüssigkeit Z wurde mit 168 cm³/h zugeführt.

Es ergab sich ein Cu-Fluß von 17 µg/cm³·2 min.

**Beispiel 4 (erfindungsgemäß)**

Es wurde wie in Beispiel 3, jedoch mit folgenden Abweichungen gearbeitet:

Die frisch zugeführte Flüssigkeit A enthielt 1 800 ppm Cu, die Zuspeisung erfolgte mit 1155 cm³/h.

Die im Kreislauf geführte Flüssigkeit A enthielt 560 ppm Cu. Das im Kreislauf geführte Gemisch aus wäßriger und organischer Phase enthielt 16 500 ppm Cu und besaßt einen pH-Wert von 1,1. Die frisch zugespeiste Flüssigkeit Z besaß einen pH-Wert von 0,69, die Zuspeisung erfolgte mit ca. 100 cm³/h. Es ergab sich ein Cu-Fluß von 16,3 µg/cm²·min.

Das als Komplexbildner verwendete LIX® 63/70 ist eine von Henkel Corp., Kankakee, Illinois, USA, beziehbare Mischung zweier Hydroxyoxime.

**Patentansprüche**

1. Verfahren zum Überführen von Metallionen aus einer wäßrigen Flüssigkeit A in eine nichtwäßrige Flüssigkeit B und von B in eine wäßrige Flüssigkeit Z, wobei B in einer ersten Überführungszone die Metallionen aus A aufnimmt und dann zu einer zweiten Überführungszone geführt wird, wo es die Metallionen an Z abgibt, wobei ferner die Flüssigkeit B mit den Flüssigkeiten A und Z nicht oder nicht nennenswert mischbar ist, mindestens einen Komplexbildner für die Metallionen enthält und ein Lösungsmittel für die komplexierten Metallionen darstellt, und wobei man die Flüssigkeit B kontinuierlich im Kreislauf durch die Überführungszonen führt, wobei die Flüssigkeit A von der im Kreislauf geführten Flüssigkeit B durch eine oder mehrere mikroporöse hydrophobe Membranen getrennt gehalten wird, in deren Poren sich ein Teil der Gesamtmenge der Flüssigkeit B befindet, dadurch gekennzeichnet, daß man in der zweiten Überführungszone die Flüssigkeit B mit der Flüssigkeit Z mechanisch vermischt, aus diesem Gemisch wäßrige Phase durch einen mechanischen Abscheideprozeß abtrennt und die übrigen Anteile des Gemisches wieder in den Kreislauf zurückführt.

2. Verfahren nach Anspruch 1, dadurch gekennzeichnet, daß man die Flüssigkeit B im Kreislauf durch mehr als zwei Überführungszonen führt, wobei deren Gesamtzahl eine gerade Zahl ist und wobei B abwechselnd in einer Überführungszone Metallionen aus der Flüssigkeit A aufnimmt und in der darauffolgenden an die Flüssigkeit Z abgibt und umgekehrt.

3. Verfahren nach den Ansprüchen 1 bis 2, dadurch gekennzeichnet, daß bei dem mechanischen Abscheideprozeß nur ein Teil der in dem Gemisch enthaltenen wäßrigen Phase abgetrennt wird.

4. Verfahren nach den Ansprüchen 1 bis 3, dadurch gekennzeichnet, daß gekoppelt mit dem Überführen der Metallionen ein Überführen von Kationen X, die mit den Metallionen nicht identisch sind, in Gegenrichtung zur Überführung der Metallionen durchgeführt wird, wobei die Kationen X in der Flüssigkeit B ebenfalls in Form von gelösten Komplexen vorliegen.

5. Verfahren nach Anspruch 4, dadurch gekennzeichnet, daß die Konzentration ($X_Z$) von X in Z größer ist als die Konzentration ($X_A$) von X in A und daß $\frac{X_Z}{X_A}$ mindestens zu Beginn des Verfahrens größer ist als $\frac{M_Z \cdot n_M}{M_A \cdot n_X}$, wobei $M_A$ und $M_Z$ die Konzentration der Metallionen in den Flüssigkeiten A bzw. Z und wobei $n_M$ und $n_X$ die Wertigkeiten der Metallionen bzw. der Kationen X bedeuten.

6. Verfahren nach Anspruch 5, dadurch gekennzeichnet, daß $M_Z$ größer ist als $M_A$.

7. Verfahren nach den Ansprüchen 4 bis 6, dadurch gekennzeichnet, daß die Kationen X Wasserstoffionen sind.

8. Verfahren nach Anspruch 7, dadurch gekennzeichnet, daß in der Flüssigkeit A durch Neutralisieren der übergeführten Wasserstoffionen ein weitgehend konstanter pH-Wert aufrechterhalten wird.

9. Verfahren nach den Ansprüchen 1 bis 8, dadurch gekennzeichnet, daß die Flüssigkeit A im Kreislauf geführt wird.

10. Verfahren nach den Ansprüchen 1 bis 9, dadurch gekennzeichnet, daß als Membranen Hohlfäden oder Rohre verwendet werden.

11. Verfahren nach Anspruch 10, dadurch gekennzeichnet, daß die Hohlfäden oder Rohre senkrecht angeordnet sind und die Flüssigkeit B jeweils von oben nach unten an ihren Oberflächen vorbeigeführt wird.

12. Verfahren nach Anspruch 1 bis 11, dadurch gekennzeichnet, daß die Membranen ein verzelltes Porensystem aufweisen, das aus Zellen und Verbindungsporen zwischen den Zellen besteht.

13. Verfahren nach den Ansprüchen 1 bis 12, dadurch gekennzeichnet, daß das Porenvolumen der Membranen 65-85 % ihres Gesamtvolumens beträgt.

14. Verfahren nach den Ansprüchen 1 bis 13, dadurch gekennzeichnet, daß das Porenvolumen der Membran 70-80 % ihres Gesamtvolumens beträgt.

15. Verfahren nach den Ansprüchen 1 bis 14, dadurch gekennzeichnet, daß die Wandstärke der Membranen etwa 50 bis 400 μm beträgt.

16. Verfahren nach den Ansprüchen 1 bis 15, dadurch gekennzeichnet, daß die Wandstärke der Membran etwa 50 bis 300 μm beträgt.

17. Verfahren nach den Ansprüchen 1 bis 16, dadurch gekennzeichnet, daß die Membranen aus Polypropylen bestehen.

18. Verfahren nach den Ansprüchen 1 bis 16, dadurch gekennzeichnet, daß die Membranen aus Polyvinylidenfluorid bestehen.

19. Verfahren nach den Ansprüchen 1 bis 18, dadurch gekennzeichnet, daß die Flüssigkeit B die Lösung eines oder mehrerer Komplexbildner in einem unpolaren Lösungsmittel oder Lösungsmittelgemisch ist.

20. Verfahren nach den Ansprüchen 1 bis 19, dadurch gekennzeichnet, daß als Komplexbildner Kronenäther verwendet werden.

21. Verfahren nach den Ansprüchen 1 bis 19, dadurch gekennzeichnet, daß als Komplexbildner chelatbildende Hydroxyoxime verwendet werden.

22. Verfahren nach den Ansprüchen 1 bis 21, dadurch gekennzeichnet, daß die nach dem mechanischen Abscheideprozeß erhaltene wäßrige Phase einer Reinigungsoperation unterworfen wird.

**Claims**

1. A process for transferring metal ions from an aqueous liquid A to a non-aqueous liquid B and from B to an aqueous liquid Z, B taking up the metal ions from A in a first transfer zone and then being transferred to a second transfer zone where it passes the metal ions to Z, the liquid B being immiscible or substantially immiscible with the liquids A and Z, containing at least one complexing agent for the metal ions and representing a solvent for the complexed metal ions, and the liquid B being continuously circulated through the transfer zones, the liquid A being kept separate from the circulated liquid B by one or more microporous hydrophobic membranes of which the pores contain part of the total quantity of liquid B, characterized in that the liquid B is mechanically mixed with the liquid Z in the second transfer zone, aqueous phase is separated off from the resulting mixture by a mechanical separation process and the remaining parts of the mixture are returned to the circuit.

2. A process as claimed in claim 1, characterized in that the liquid B is circulated through more than two transfer zones of which the total number is an even number and B alternately taking up metal ions from liquid A in one transfer zone and passing them to the liquid A in the following transfer zone and vice versa.

3. A process as claimed in claims 1 and 2, characterized in that only part of the aqueous phase present in the mixture is separated off in the mechanical separation process.

4. A process as claimed in claims 1 to 3, characterized in that, coupled with the transfer of metal ions, a transfer of cations X, which are not identical with the metal ions, is carried out in the opposite direction to the transfer of the metal ions, the cations X also being present in the liquid B in the form of dissolved complexes.

5. A process as claimed in claim 4, characterized in that the concentration $(X_Z)$ of X in Z is greater than the concentration $(X_A)$ of X in A and in that $\frac{X_Z}{X_A}$ is greater, at least at the beginning of the process, than $\frac{M_Z}{M_A} \cdot \frac{n_M}{n_X}$, where $M_A$ and and $M_Z$ are the concentrations of the metal ions in liquids A and Z and $n_M$ and $n_X$ are the valencies of the metal ions and of the cations X.

6. A process as claimed in claim 5, characterized in that $M_Z$ is greater than $M_A$.

7. A process as claimed in claims 4 to 6, characterized in that the cations X are hydrogen ions.

8. A process as claimed in claim 7, characterized in that a substantially constant pH value is maintained in liquid A through neutralization of the transferred hydrogen ions.

9. A process as claimed in claims 1 to 8, characterized in that liquid A is circulated.

10. A process as claimed in claims 1 to 9, characterized in that hollow filaments or tubes are used as membranes.

11. A process as claimed in claim 10, characterized in that the hollow filaments or tubes are arranged vertically and liquid B is guided downwards past their surfaces.

12. A process as claimed in claims 1 to 11, characterized in that the membranes comprise a cellular pore system consisting of cells and connecting pores between the cells.

13. A process as claimed in claims 1 to 12, characterized in that the pore volume of the membranes makes up 65 to 85 % of their total volume.

14. A process as claimed in claims 1 to 13, characterized in that the pore volume of the membrane makes up 70 to 80 % of their total volume.

15. A process as claimed in claims 1 to 14, characterized in that the membranes have a wall thickness of from about 50 to 400 μm.

16. A process as claimed in claims 1 to 15, characterized in that the membrane has a wall thickness of from about 50 to 300 μm.

17. A process as claimed in claims 1 to 16, characterized in that the membranes consist of polypropylene.

18. A process as claimed in claims 1 to 16, characterized in that the membranes consist of polyvinylidene fluoride.

19. A process as claimed in claims 1 to 18, characterized in that liquid B is a solution of one or more complexing agents in an apolar solvent or solvent mixture.

20. A process as claimed in claims 1 to 19, characterized in that crown ethers are used as complexing agents.

21. A process as claimed in claims 1 to 19, characterized in that chelating hydroxyoximes are used as complexing agents.

22. A process as claimed in claims 1 to 21, characterized in that the aqueous phase obtained after the mechanical separation process is subjected to a purification step.

**Revendications**

1. Procédé pour le transfert d'ions métalliques, depuis un liquide aqueux A dans un liquide non-aqueux B et depuis B dans un liquide aqueux Z, dans lequel B dans une première zone de transfert, extrait des ions métalliques de A et est ensuite conduit vers une deuxième zone de transfert où il abandonne les ions métalliques à Z, dans lequel en outre le liquide B n'est pas miscible, ou n'est pas notablement miscible, avec les liquides A et Z, contient au moins un complexant pour les ions métalliques et représente un solvant pour les ions métalliques complexés, et dans lequel le liquide B circule a travers les zones de transfert en continu dans un circuit ferme, le liquide A étant maintenu séparé du liquide B, qui circule dans le circuit fermé, par une ou plusieurs membrane(s) hydrophobe(s) microporeuse(s), dans les pores desquelles se trouve une partie de la quantité totale du liquide B, le procédé étant <u>caractérisé</u> en ce que l'on mélange mécaniquemet le liquide B avec le liquide Z dans la deuxième zone de transfert, l'on sépare de ce mélange de la phase aqueuse par un procédé mécanique de séparation, et l'on réintroduit à nouveau dans le circuit fermé la partie restante du mélange.

2. Procédé conforme à la revendication 1, <u>caractérisé</u> en ce que le liquide B circule en circuit fermé à travers plus de deux zones de transfert, le nombre total de celles-ci étant un nombre pair, et en ce que B, alternativement, extrait es ions métalliques du liquide A dans une zone de transfert et les abandonne dans la suivante au liquide Z, et inversement.

3. Procédé conforme aux revendications 1 a 2, <u>caractérisé</u> en ce que, lors du procédé de séparation mécanique, seule une partie de la phase aqueuse contenue dans le mélange est séparée.

4. Procédé conforme aux revendications 1 à 3, <u>caractérisé</u> en ce que, conjointement avec le transfert des ions metalliques, on realise un transfert de cations X qui ne sont pas identiques aux cations métalliques, en sens inverse de celui du transfert des ions métalliqes, les cations X étant également présents dans le liquide B sous forme de complexes dissous.

5. Procédé conforme à la revendication 4, caractérisé en ce que la concentration $(X_Z)$ de X dans Z est supérieure à la concentration $(X_A)$ de X dans A, et que $X_Z/X_A$, au moins au début du procédé, est supérieure à $(M_Z/M_A) \cdot (n_M/n_X)$, $M_A$ et $M_Z$ représentant respectivement les concentrations des ions métalliques dans les liquides A et Z, et $n_M$ et $n_X$ représentant respectivement les valences des ions métalliques et des cations X.

6. Procédé conforme à la revendication 5, caractérisé en ce que $M_Z$ est supérieur à $M_A$.

7. Procédé conforme aux revendications 4 à 6, caractérisé en ce que les cations X sont des ions hydrogènes.

8. Procédé conforme à la revendication 7, caractérisé en ce que l'on maintient une valeur de pH pratiquement constante dans le liquide A, par neutralisation des ions hydrogènes tansférés.

9. Procédé conforme aux revendications 1 à 8, caractérisé en ce que le liquide A circule en circuit fermé.

10. Procédé conforme aux revendications 1 à 9, caractérisé en ce que l'on utilise comme membranes des fibres creuses ou des tubes.

11. Procédé conforme à la revendication 10, caractérisé en ce que les fibres creuses ou les tubes sont disposés verticalement et l'on fait passer le liquide B à chaque fois de haut en bas à leurs surfaces.

12. Procédé conforme aux revendications 1 à 11, caractérisé en ce que les membranes présentent un système de pores et de cellules, constitué de cellules et de pores de liaison entre les cellules.

13. Procédé conforme aux revendications 1 à 12, caractérisé en ce que le volume des pores des membranes constitue de 65 à 85 % du volume total de celles-ci.

14. Procédé conforme aux revendications 1 à 13, caractérisé en ce que le volume des pores des membranes constitue de 70 à 80 % du volume total de celles-ci.

15. Procédé conforme aux revendications 1 à 14, caractérisé en ce que l'épaisseur des parois des membranes est de 50 à 400 μm environ.

16. Procédé conforme aux revendications 1 à 15, caractérisé en ce que l'épaisseur des parois des membranes est de 50 à 300 μm environ.

17. Procédé conforme aux revendications 1 à 16, caractérisé en ce que les membranes sont constituées de polypropylène.

18. Procédé conforme aux revendications 1 à 16, caractérisé en ce que les membranes sont constituées de poly(fluorure de vinylidène).

19. Procédé conforme aux revendications 1 à 18, caractérisé en ce que le liquide B est une solution d'un ou plusieurs complexant(s) dans un solvant, ou mélange de solvants, non polaire.

20. Procédé conforme aux revendications 1 à 19, caractérisé en ce que l'on utilise comme complexants des éthers-couronnes.

21. Procédé conforme aux revendications 1 à 19, caractérisè en ce que l'on utilise comme complexants des hydroxyoximes qui forment des chélates.

22. Procédé conforme aux revendications 1 à 21, caractérisé en ce que la phase aqueuse obtenue selon le procédé de séparation mécanique est soumise à une opération de purification.

Abb. 1